# EUROPEAN PATENT APPLICATION

(11) **EP 4 339 085 A1**
(43) Date of publication of application: **20.03.2024**
(21) Application number: 22807481.1
(22) Date of filing: 10.05.2022
(51) Int. Cl.: B62K 13/08, B62H 1/12, B62K 15/00

(54) **SHAPE-ALTERABLE BICYCLE**

(30) Priority: 11.05.2021 JP 2021080692
(71) Applicant: Sei Chugen, Tokyo 1100016 (JP)
(72) Inventor: Sei Chugen, Tokyo 1100016 (JP)
(74) Representative: Danubia Patent & Law Office LLC
(86) International application number: PCT/JP2022/019869
(87) International publication number: WO 2022/239782

(57) **Abstract**

[Problem] To provide a bicycle whose wheelbase can be changed.

[Solving Means] A top tube 1011 included in a bicycle 1 consists of a front top tube 1011F that is located on the front side and a rear top tube 1011B that is located in the rear side. The rear top tube 1011B is inserted into the front top tube 1011F and is fixed to the front top tube 1011F by a length adjustment mechanism. A user is able to adjust the length in the front-rear direction of the top tube 1011 by releasing the rear top tube 1011B fixed by the length adjustment mechanism, sliding the rear top tube 1011B with respect to the front top tube 1011F in the front-rear direction, and fixing the rear top tube 1011B to the front top tube 1011F at a desired position using the length adjustment mechanism.

## Description

### TECHNICAL FIELD

The present invention relates to a deformable bicycle.

### BACKGROUND ART

A deformable bicycle may be convenient. For example, the geometry of a bicycle suitable for the body of a user is changes with the growth of the body of the user. For this reason, if there is a bicycle whose geometry can be changed, the user can continue to use the same bicycle even if the body of the user grows.

Examples of patent literature that discloses a deformable bicycle include Patent Literature 1. Patent Literature 1 describes a bicycle that can be deformed into a cart and in which a cart portion provided with casters is disposed between two left and right front wheels and one hinge mechanism is disposed on a frame (top tube). This bicycle allows a user to fold the frame into an L-shape at the hinge mechanism and to push the cart contacting the ground through the two front wheels and casters using handlebars with a rear wheel floating over the ground.

### Citation List

### Patent Literature

[Patent Literature 1] Japanese Unexamined Patent Application Publication No. 2009-143340

### SUMMARY OF INVENTION

### Technical Problem

In the case of an ordinary bicycle, the height of the handlebars can be changed by changing the position with respect to the top tube, of the handle post slidable with respect to the top tube. Also, the height of the saddle can be changed by changing the position with respect to the seat tube, of the seat post slidable with respect to the seat tube. Moreover, the distance between the handlebars and saddle can be changed by replacing the handlebars or stem.

However, in the case of the ordinary bicycle, the wheelbase, i.e., the distance from the center of the front wheel to the center of the rear wheel cannot be changed. The straight line stability is increased as the wheelbase becomes longer. For this reason, if the height of the handlebars of the bicycle, the height of the saddle, or the distance between the handlebars and saddle is adjusted with the growth of the body of the user, the straight line stability of the bicycle for the user would decrease.

In view of the foregoing, the present invention provides a bicycle whose wheelbase can be changed.

### Solution to Problem

To solve the above problem, the present invention proposes, as a first aspect, a bicycle including a top tube including a front top tube having one end coupled to a head tube and a rear top tube having one end coupled to a seat tube, wherein a length of the top tube is changed by sliding the rear top tube with respect to the front top tube, and the bicycle further include a length adjustment mechanism configured to fix the rear top tube to the front top tube.

The wheelbase of the bicycle according to the first aspect can be changed.

According to a second aspect, the bicycle of the first aspect may include a down tube having one end coupled to the rear head tube and another end coupled to a bottom bracket shell.

According to a third aspect, the bicycle of the first aspect may further include a down tube including a front down tube having one end coupled to the head tube and a rear down tube having one end coupled to a bottom bracket shell, the front down tube may be provided with a front hinge including a horizontally extending rotation shaft, the rear down tube may be provided with a rear hinge including a horizontally extending rotation shaft, a length of the down tube may be changed by sliding the rear down tube with respect to the front down tube, and the bicycle may further include, in addition to the length adjustment mechanism serving as a first length adjustment mechanism, a second length adjustment mechanism configured to fix the rear down tube to the front down tube.

The frame of the bicycle according to the second or third aspect has higher stiffness than the frame of a wheelbase-changeable bicycle that includes a length-changeable top tube but does not include a down tube.

According to a fourth aspect, in the bicycle of the first aspect, the front top tube may be provided with a front hinge, the front hinge may allow a state of the front top tube to be switched between a straight state and a bent state, the rear top tube may be provided with a rear hinge, the rear hinge may allow a state of the rear top tube to be switched between a straight state and a bent state, a horizontal distance between the rotation shaft of the front hinge and a rotation shaft of a front wheel and a horizontal distance between the rotation shaft of the rear hinge and a rotation shaft of a rear wheel may be substantially equal, the bicycle may serve as a bicycle when the front top tube and the rear top tube are straight, the bicycle may serve as a cart when the front top tube and the rear top tube are bent, the bicycle may include, in addition to the front wheel and the rear wheel when the bicycle is serving as a bicycle, one or more auxiliary wheels that do not contact the ground when the bicycle is serving as a bicycle and contacts the ground when the bicycle is serving as a cart, and the bicycle may include a force transmission mechanism capable of switching between a unidirectional freewheel state in which when a force to rotate the rear wheel forward is applied, the force is transmitted to the rear wheel and when a force to rotate the rear wheel rearward is applied, the force is not substantially transmitted to the rear wheel and a bidirectional freewheel state in which in any of a case where a force to rotate the rear wheel forward is applied and a case where a force to rotate the rear wheel rearward is applied, the force is not substantially transmitted to the rear wheel.

According to the bicycle of the fourth aspect, the front wheel and rear wheel of the bicycle serving as a bicycle serve as the left and right front wheels of the bicycle serving as a cart. This prevents the center of gravity of the bicycle serving as a cart from being greatly shifted in the left-right direction. As a result, the bicycle serving as a cart exhibits high stability, allowing the user to walk while pushing the cart comfortably.

According to a fifth aspect, in the bicycle of the fourth aspect, the one or more auxiliary wheel may two auxiliary wheels, and when the bicycle is serving as a cart, a distance between a position in which the auxiliary wheel located near the front wheel of the two auxiliary wheels contacts the ground and a position in which the front wheel contacts the ground and a distance between a position in which the auxiliary wheel located near the rear wheel of the two auxiliary wheels contacts the ground and a position in which the rear wheel contacts the ground may be substantially equal.

According to the bicycle of the fifth aspect, when the bicycle is serving as a cart, the two auxiliary wheels serve as left and right rear wheels and contact the ground at a total of four points along with the two front wheels. As a result, the bicycle serving as a cart exhibits higher stability than when it includes one auxiliary wheel, allowing the user to walk while pushing the cart comfortably.

According to a sixth aspect, the bicycle of the fourth aspect may include a seat, the seat being an apparatus that when the bicycle serves as a cart, is mounted on the top tube, the rotation shaft of the front wheel, and the rotation shaft of the rear wheel such that a self-weight of the apparatus is applied to the top tube, the rotation shaft of the front wheel, and the rotation shaft of the rear wheel and on which a person is to be seated.

When serving as a cart, the bicycle of the sixth aspect is able to serve as a stroller that a child is seated in and that can be pushed by hand, or a wheelchair that a person with difficulty walking is seated in and that can be pushed by hand.

According to a seventh aspect, the bicycle of the fourth aspect may include a container, the container being an apparatus that when the bicycle serves as a cart, is mounted on the top tube, the rotation shaft of the front wheel, and the rotation shaft of the rear wheel such that a self-weight of the apparatus is applied to the top tube, the rotation shaft of the front wheel, and the rotation shaft of the rear wheel and that aims to contain goods.

According to the bicycle of the seventh aspect, when the bicycle serves as a cart, the user is able to walk while pushing the cart having goods thereon.

According to an eighth aspect, in the bicycle of the fourth aspect, at least one of the one or more auxiliary wheels may be detachable from the top tube.

According to the bicycle of the eighth aspect, by detaching the auxiliary wheel from the top tube in the bicycle serving as a bicycle, the auxiliary wheel would not interfere with the travel.

According to a ninth aspect, in the bicycle of the fourth aspect, at least one of the one or more auxiliary wheels may be coupled to the top tube through a leg extendable downward from the top tube.

According to the bicycle of the ninth aspect, by contracting the extendable leg and locating the auxiliary wheel in a position near the top tube in the bicycle serving as a bicycle, the auxiliary wheel is less likely to interfere with the travel.

According to a tenth aspect, in the bicycle of the fourth aspect, at least one of the one or more auxiliary wheels may be coupled to the seat tube or a bottom bracket shell through a leg that does not extend downward from the seat tube or the bottom bracket shell.

According to the bicycle of the tenth aspect, the auxiliary wheel disposed below the seat tube or bottom bracket shell is less likely to interfere with the travel when the bicycle is serving as a bicycle. Also, when the bicycle is serving as a cart, there is no need to attach the auxiliary wheel to the top tube or the like.

### Advantageous Effects of Invention

The present invention provides the bicycle whose wheelbase can be changed.

### BRIEF DESCRIPTION OF DRAWINGS

FIG. 1 is a right side view of a bicycle according to a first embodiment.
FIG. 2 is a drawing showing a state in which the bicycle according to the first embodiment is separated in the front-rear direction.
FIG. 3 is a drawing showing an example of the length adjustment mechanism of the bicycle according to the first embodiment.
FIG. 4 is a drawing showing the positions of auxiliary wheels with respect to a frame in the bicycle according to the first embodiment.
FIG. 5 is a rear-left side view of a cart according to the first embodiment.
FIG. 6 is a drawing showing the crank lock mechanism of the cart according to the first embodiment.
FIG. 7 is a front-right side view of the cart (used as a cart) according to the first embodiment.
FIG. 8 is a front-right side view of the cart (used as a stroller) according to the first embodiment.
FIG. 9 is a front-right side view of the cart (used as a wheelchair) according to the first embodiment.
FIG. 10 is a drawing showing the structure of the freewheel of the bicycle according to the first embodiment.
FIG. 11 is a drawing showing the structure of the freewheel of the bicycle according to the first embodiment.
FIG. 12 is a drawing showing the shape of the pressing head of the freewheel of the bicycle according to the first embodiment.
FIG. 13 is a left side view of a bicycle according to a modification of the first embodiment.
FIG. 14 is a rear-right side view of a cart according to the modification of the first embodiment.
FIG. 15 is a drawing showing the length adjustment mechanism of the bicycle according to the modification of the first embodiment.
FIG. 16 is a drawing showing the structure of the freewheel of the bicycle according to the modification of the first embodiment.
FIG. 17 is a drawing showing the structure of the freewheel of the bicycle according to the modification of the first embodiment.
FIGS. 18A to 18C are drawings showing an attachment for the bicycle according to the modification of the first embodiment.
FIG. 19 is a drawing showing the bicycle according to the modification of the first embodiment to which the attachment is attached.
FIG. 20 is a drawing showing the bicycle according to the modification of the first embodiment to which the attachment is attached.
FIG. 21 is a drawing showing the bicycle according to the modification of the first embodiment to which the attachment is attached.
FIG. 22 is a right side view of a bicycle according to a second embodiment.
FIG. 23 is a drawing showing a state in which the bicycle according to the second embodiment is separated in the front-rear direction.
FIG. 24 is a right side view of a bicycle according to a modification of the second embodiment.

### DESCRIPTION OF EMBODIMENTS

[First Embodiment] Now, a bicycle 1 according to a first embodiment of the present invention will be described. The bicycle 1 is a bicycle that can be deformed into a cart. Hereafter, the bicycle 1 serving as a bicycle will be referred to as the "bicycle 1B," and the bicycle 1 serving as a cart as the "cart 1C."

In the following description, the front and rear and the left and right of the bicycle 1 refer to the front and rear and the left and right seen from a user holding the handlebars of the bicycle 1. Also, in the following description, the up-down direction, vertical direction, and horizontal direction of the bicycle 1 refer to the up-down direction, vertical direction, and horizontal direction with the bicycle 1 placed on the ground with a posture taken when the user usually uses the bicycle.

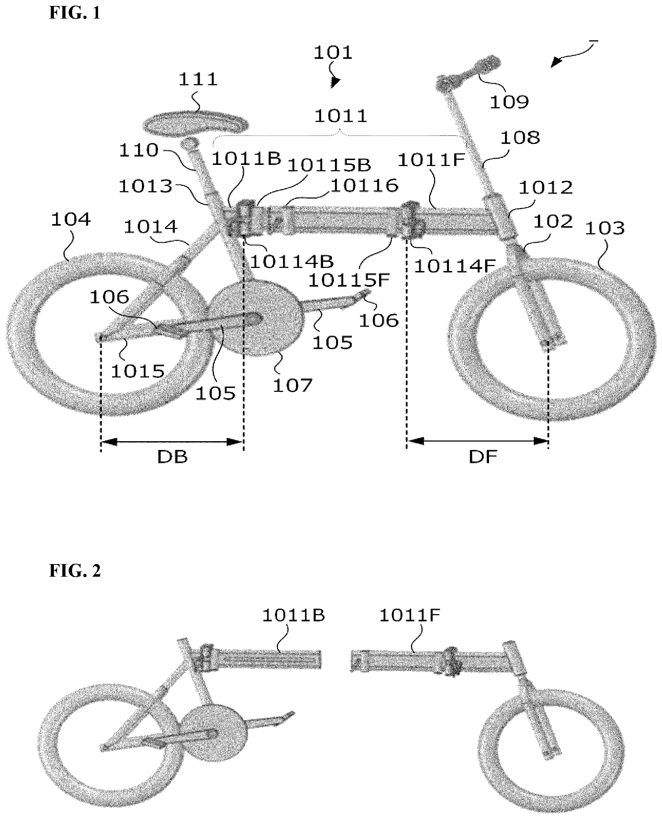

FIG. 1 is an external view of the bicycle 1B seen from the right side. The bicycle 1B includes a frame 101 forming the main body thereof. The frame 101 includes a top tube 1011 that extends substantially in the horizontal direction, a head tube 1012 coupled to the front end of the top tube 1011, a seat tube 1013 coupled to the rear end of the top tube 1011, a seat stay 1014 coupled to a portion near the upper end of the seat tube 1013 and extending in a rear-downward direction, a bottom bracket (BB) shell (not shown) coupled to the lower end of the seat tube 1013, and a chain stay 1015 having one end coupled to the rear end of the seat stay 1014 and the other end coupled to the BB shell. The frame 101 does not include a down tube included in a typical bicycle frame.

The bicycle 1B also includes a front fork 102 mounted on the head tube 1012, a front wheel 103 mounted on the front fork 102, a rear wheel 104 mounted on the rear end of the frame 101, left and right cranks 105 mounted to the BB shell through a bottom bracket (BB) (not shown), a pair of pedals 106 mounted on the left and right cranks 105, and a chain ring 107 that rotates with the cranks 105 when the user rotates the cranks 105 in the clockwise direction of FIG. 1 by stepping on the pedals 106.

The bicycle 1B also includes a handle post 108 whose lower end is coupled to the front fork 102 in the head tube 1012, handlebars 109 mounted on portions near the upper end of the handle post 108, a seat post 110 whose lower end is coupled to the seat tube 1013, and a saddle 111 mounted on the upper end of the seat post 110.

The bicycle 1B also includes a sprocket (not shown) coupled to the hub (not shown) of the rear wheel 104 and an annular chain (not shown) hung on the chain ring 107 and sprocket.

The top tube 1011 of the bicycle 1B consists of a front top tube 1011F that is located on the front side and a rear top tube 1011B that is located in the rear side. For example, the rear top tube 1011B is inserted into the front top tube 1011F and is fixed to the front top tube 1011F using a length adjustment mechanism. The user is able to adjust the length in the front-rear direction of the top tube 1011 by releasing the rear top tube 1011B fixed by the length adjustment mechanism, sliding the rear top tube 1011B with respect to the front top tube 1011F in the front-rear direction, and fixing the rear top tube 1011B to the front top tube 1011F in a desired position using the length adjustment mechanism.

FIG. 2 is a partial view of the bicycle 1B in which the front top tube 1011F and rear top tube 1011B are separated from each other.

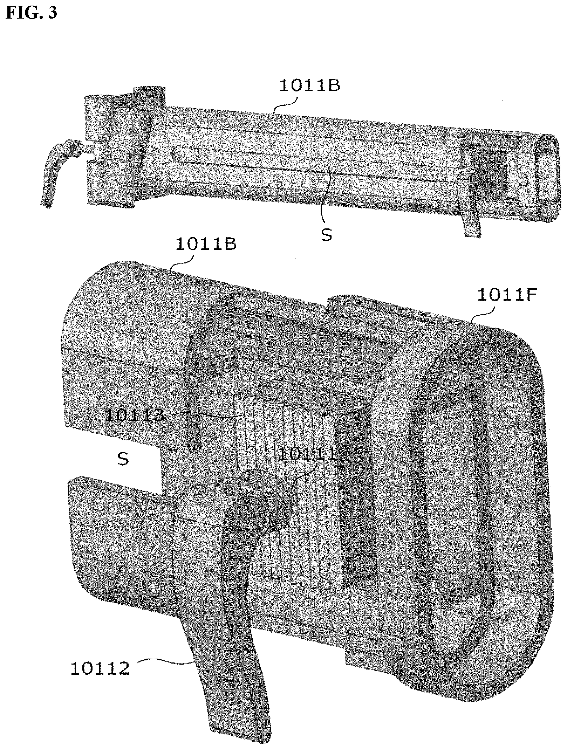

FIG. 3 is a drawing showing an example of the length adjustment mechanism for fixing the rear top tube 1011B to the front top tube 1011F in any position. The length adjustment mechanism shown in FIG. 3 includes a slit S, which is an elongated hole disposed on the right side surface of the rear top tube 1011B so as to extend in the front-rear direction, a shaft 10111 disposed so as to pass through the slit S and a hole disposed on the right side surface near the rear end of the front top tube 1011F so as to communicate with the slit S, a lever 10112 mounted on the outer end of the shaft 10111, and a pressing head 10113 that is disposed inside the front top tube 1011F and rear top tube 1011B and that when the lever 10112 is lowered, is pushed out in the direction in which it moves away from the shaft 10111.

When the user adjusts the position in the front-rear direction of the rear top tube 1011B with respect to the front top tube 1011F with the lever 10112 raised and then lowers the lever 10112, the rear top tube 1011B is pressed against and fixed to the front top tube 1011F by the pressing head 10113.

Referring back to FIG. 1, the description of the configuration of the top tube 1011 will be continued. The top tube 1011 is provided with a hinge 10114F (an example of a front hinge) and a hinge 10114B (an example of a rear hinge). The hinge 10114F is a mechanism that is disposed on the front top tube 1011F and allows the front top tube 1011F to be bent around a vertical axis. The hinge 10114B is a mechanism that is disposed on the rear top tube 1011B and allows the rear top tube 1011B to be bent around a vertical axis.

The positions of the hinge 10114F and hinge 10114B are determined such that the distance DF in the horizontal direction between the rotation shaft of the hinge 10114F and the rotation shaft of the front wheel 103 and the distance DB in the horizontal direction between the rotation shaft of the hinge 10114B and the rotation shaft of the rear wheel 104 become substantially equal.

The hinge 10114F includes a lever. The user is able to keep the front top tube 1011F straight by straightening the front top tube 1011F with the lever raised and then lowering the lever.

The hinge 10114B also includes a lever having a function similar to that of the hinge 10114F. As in the case of the front top tube 1011F, the user is able to bend or straighten the rear top tube 101 1B by operating the lever.

The directions in which the front top tube 1011F and rear top tube 1011B are bent around the vertical axes are the same direction. It is assumed that the example in FIG. 1 is seen from above. By bending the front portion of the straight front top tube 1011F with respect to the rear portion thereof counterclockwise by about 90 degrees and bending the rear portion of the straight rear top tube 1011B with respect to the front portion thereof clockwise by about 90 degrees, the top tube 1011 is deformed into a U-shape.

The top tube 1011 also includes a mounting portion 10115F and a mounting portion 10115B for mounting the legs of auxiliary wheels. The mounting portion 10115F is disposed on the front top tube 1011F, and the mounting portion 10115B is disposed on the rear top tube 1011B.

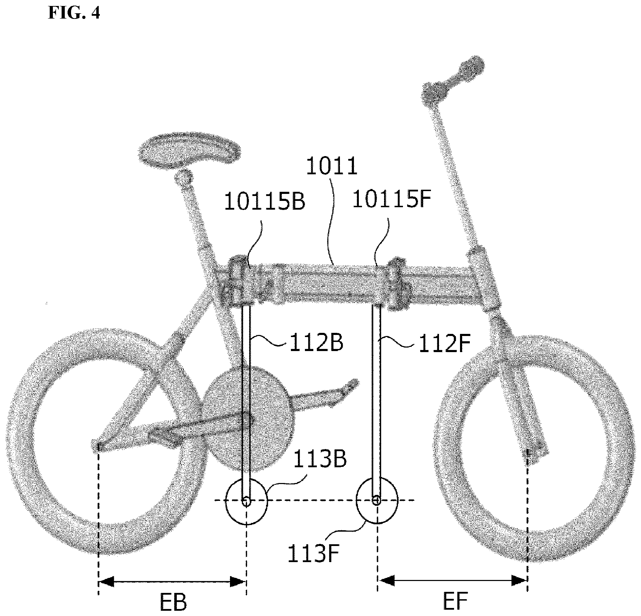

FIG. 4 is a drawing showing the positions of the auxiliary wheels with respect to the frame 101. As shown in FIG. 4, the upper end of a leg 112F is mounted on the mounting portion 10115F and thus an auxiliary wheel 113F mounted on the lower end of the leg 112F is disposed below the top tube 1011. Also, the upper end of a leg 112B is mounted on the mounting portion 10115B and thus an auxiliary wheel 113B mounted on the lower end of the leg 112B is disposed below the top tube 1011.

The lengths of the leg 112F and leg 112B and the mounting angles of these legs with respect to the top tube 1011 are determined such that, with the leg 112F and leg 112B mounted on the top tube 1011, the positions in the up-down direction (heights) of the rotation shaft of the auxiliary wheel 113F and the rotation shaft of the auxiliary wheel 113B become substantially equal and the distance EF in the horizontal direction between the rotation shaft of the front wheel 103 and the rotation shaft of the auxiliary wheel 113F and the distance EB in the horizontal direction between the rotation shaft of the rear wheel 104 and the rotation shaft of the auxiliary wheel 113B become substantially equal.

The diameters of the auxiliary wheel 113F and auxiliary wheel 113B are substantially equal. Accordingly, in the bicycle 1 serving as the cart 1C (to be discussed later), the distance between the position in which the front wheel 103 contacts the ground and the position in which the auxiliary wheel 113F contacts the ground and the distance between the position in which the rear wheel 104 contacts the ground and the position in which the auxiliary wheel 113B contacts the ground are substantially equal.

The top tube 1011 also includes a mounting portion 10116 for mounting the handle post 108 having the handlebars 109 mounted thereon (see FIG. 1).

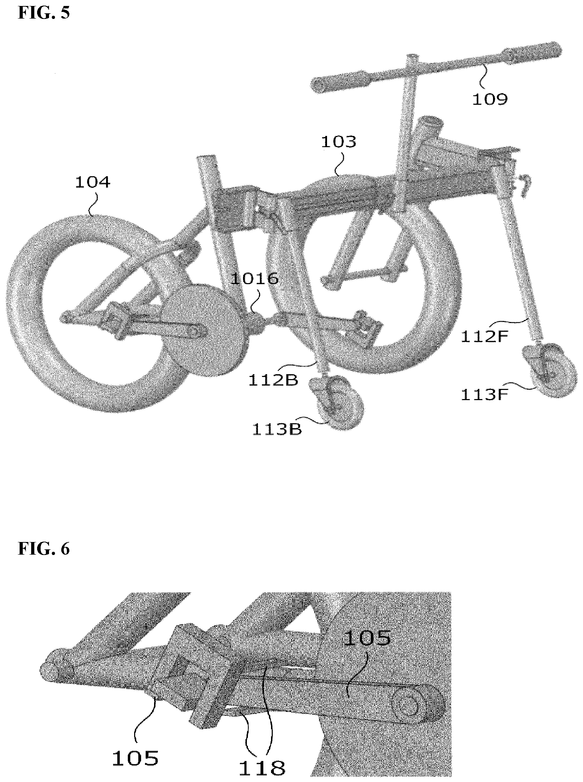

FIG. 5 is a rear-left side view of the bicycle 1 serving as the cart 1C. When the user mounts the leg 112F and leg 112B on the top tube 1011, bents the front top tube 1011F and rear top tube 1011B, demounts the handle post 108 from the head tube 1012, and mounts it on the mounting portion 10116, the bicycle 1 becomes the cart 1C shown in FIG. 5. Note that a BB shell 1016 not shown in FIG. 1 is shown in FIG. 5.

The user is able to walk while grasping the handlebars 109 and pushing the cart 1C from the rear of the cart 1C. By hanging goods on the top tube 1011, the user is able to easily walk without having to endure the weight of the goods.

The bicycle 1 includes a crank lock mechanism 118 that prevents rotation of the cranks 105 due to rotation of the rear wheel 104 when the cart 1C is pushed and moved. FIG. 6 is a drawing illustrating the crank lock mechanism 118.

By attaching an attachment, which is a part detachable from the cart 1C, the user is able to use the cart 1C as a cart for loading and carrying goods, a stroller in which a child can be seated and that can be pushed by the user, or a wheelchair in which a person with difficulty walking can be seated and that can be pushed by the user.

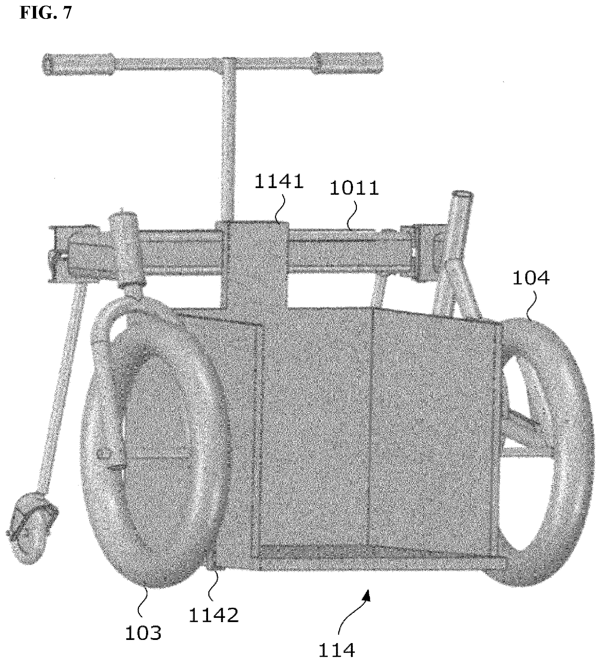

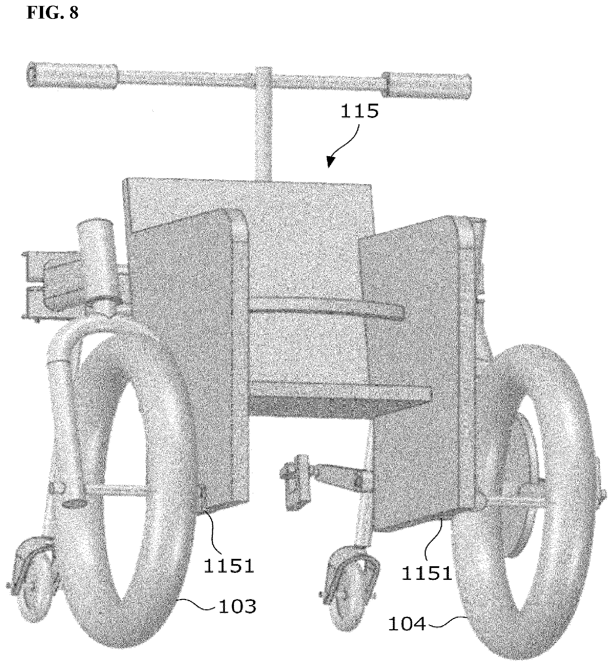

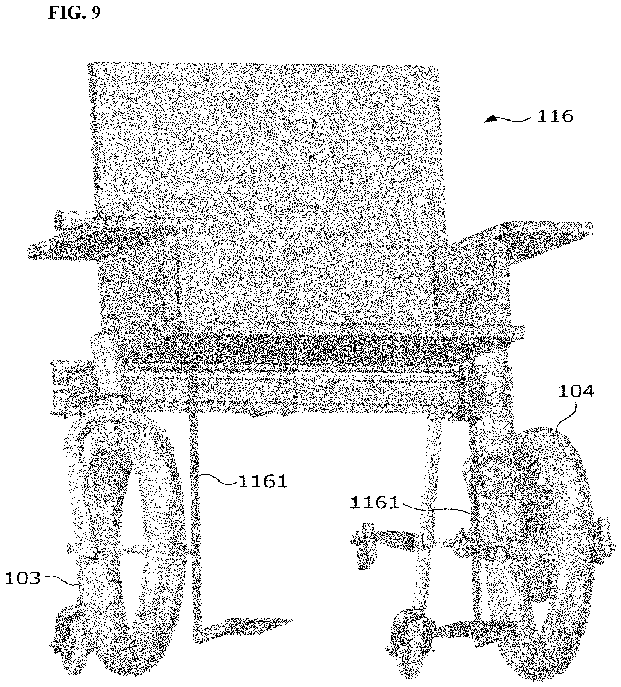

FIG. 7 is a front-right side view of the cart 1C having a container 114, which is an attachment for carts, mounted thereon. The container 114 is an apparatus for containing goods. FIG. 8 is a front-right side view of the cart 1C having a seat 115, which is an attachment for strollers, mounted thereon. The seat 115 is an apparatus in which a child can be seated. FIG. 9 is a front-right side view of the cart 1C having a seat 116, which is an attachment for wheelchairs, mounted thereon. The seat 116 is an apparatus in which a person with difficulty walking can be seated.

As shown in FIGS. 7 to 9, the attachments are mounted on the top tube 1011, the rotation shaft of the front wheel 103, and the rotation shaft of the rear wheel 104 such that the self-weights thereof are applied to the top tube and the like.

For example, the container 114 (FIG. 7) is provided with a hook 1141 disposed on the top thereof and a pair of coupling bars 1142 mounted on the left and right sides thereof. The user is able to mount the container 114 on the main body of the cart 1C by hooking the hook 1141 on the top tube 1011, hooking the right coupling bar 1142 on the front wheel 103, and hooking the left coupling bar 1142 (not shown) on the rotation shaft of the rear wheel 104.

The seat 115 (FIG. 8) is provided with a hook (not shown) disposed on an upper portion of the rear surface thereof and a pair of coupling bars 1151 disposed on the left and right sides thereof. The user is able to mount the seat 115 on the main body of the cart 1C by hooking the hook 1151 on the top tube 1011, hooking the right coupling bar 1151 on the front wheel 103, and hooking the left coupling bar 1151 on the rotation shaft of the rear wheel 104.

The seat 116 (FIG. 9) is provided with a hook (not shown) disposed on a portion near the rear surface of the bottom thereof and a pair of footrests 1161 mounted on left and right portions of the bottom so as to extend downward. The user is able to mount the seat 116 on the main body of the cart 1C by hooking the hook on the top tube 1011 with the seat 116 placed on the top tube 1011 for positioning, then mounting the right footrest 1161 on the front wheel 103, and mounting the left footrest 1161 on the rotation shaft of the rear wheel 104.

The rotation shaft of the rear wheel 104 is provided with a freewheel 117. The freewheel of a typical bicycle includes a so-called ratchet mechanism that when a force to rotate the rear wheel 104 forward is applied by pushing the pedal in the forward direction (in the clockwise direction seen from the right side), transmits the force to the rear wheel 104 and when a force to rotate the rear wheel 104 rearward is applied by pushing the pedal in the opposite direction (in the counterclockwise direction seen from the right side), does not substantially transmit the force to the rear wheel 104.

The freewheel 117 of the bicycle 1 further includes a so-called clutch mechanism (an example of a force transmission mechanism) by which the user can switch between the above-mentioned state of the freewheel of the typical bicycle (hereafter referred to as the "unidirectional freewheel state") and a state in which in any of the case where a force to rotate the rear wheel 104 forward is applied and the case where a force to rotate the rear wheel 104 rearward is applied, the force is not substantially transmitted to the rear wheel 104 (hereafter referred to as the "bidirectional freewheel state").

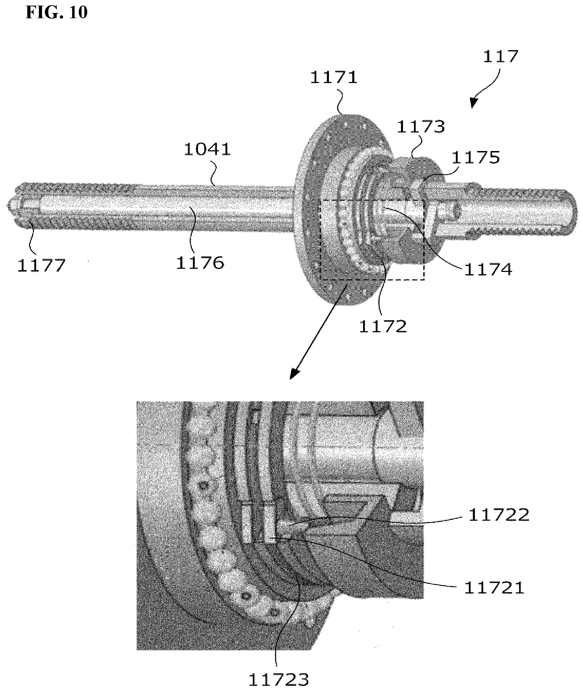

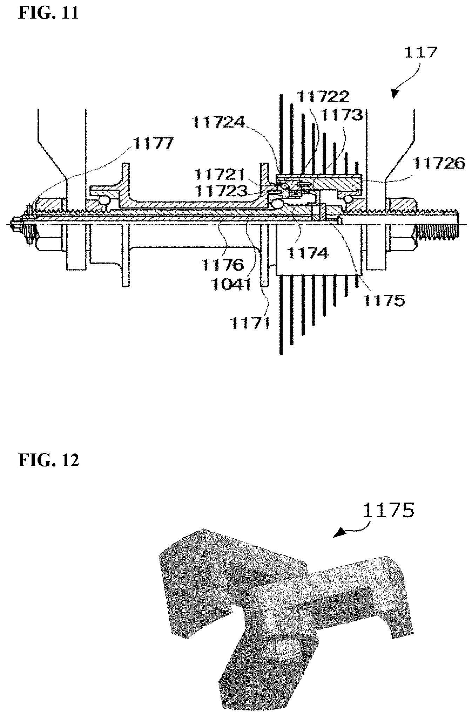

FIGS. 10 and 11 are drawings showing an example of the structure of the freewheel 117. The freewheel 117 includes a hub flange 1171 mounted on the periphery of a tubular rear wheel shaft 1041 forming the rotation shaft of the rear wheel 104, a ratchet mechanism 1172 mounted on the hub flange 1171, a clutch 1173 that prevents a sprocket 11726 (not shown in FIG. 10) from transmitting, to the hub flange 1171, a force to rotate the hub flange 1171 forward by keeping multiple ratchet claws 11721 of the ratchet mechanism 1172 lowered, a spring 1174 that is disposed between the clutch 1173 and ratchet mechanism 1172 and applies a force to the clutch 1173 in the direction in which the clutch 1173 moves away from the ratchet mechanism 1172, a pressing head 1175 that presses the clutch 1173 against the force of the spring 1174 in the direction in which the clutch 1173 approaches the ratchet mechanism 1172, a clutch bar 1176 having one end coupled to the pressing head 1175 and the other end disposed so as to be exposed from the rear wheel shaft 1041, and a pin 1177 mounted on a portion exposed from the rear wheel shaft 1041 of the clutch bar 1176. FIG. 12 is a drawing showing the shape of the pressing head 1175.

The ratchet mechanism 1172 includes the ratchet claws 11721 that rotate around the rotation shaft of the rear wheel 104 and whose state is switched between a state in which they are raised in the direction in which they move away from the rotation shaft and a state in which they are lowered in the direction in which they approach the rotation shaft, a protrusion 1722 that protrudes in the rotation shaft direction from the ratchet claws 11721, and a ring-shaped spring 11723 that energizes the ratchet claws 11721 so that the ratchet claws 11721 are raised.

When the user pulls the clutch bar 1176 out of a groove disposed so as to be grooved in the axial direction from the end surface of the rear wheel shaft 1041 while hooking a finger on the pin 1177, rotates the clutch bar 1176 around the shaft, and hooks the pin 1177 on the end surface (a non-grooved portion) of the rear wheel shaft 1041, the clutch 1173 is pushed toward the ratchet mechanism 1172 against the force of the spring 1174 and thus pushes the protrusion 11722, which protrudes from the ratchet claws 11721 of the ratchet mechanism 1172 toward the clutch 1173, in the direction in which the protrusion 11722 approaches the rotation shaft. Thus, the ratchet claws 11721 are always kept lowered, and are not caught on the sprocket 11726 even if the sprocket 11726 rotates in any direction. As a result, the freewheel 117 is placed in the bidirectional freewheel state.

When, with the freewheel 117 placed in the bidirectional freewheel state, the user applies a force to the clutch bar 1176 in the direction in which the clutch bar 1176 is pulled out of the rear wheel shaft 1041 while hooking a finger on the pin 1177, rotates the clutch bar 1176 around the shaft, and drops the pin 1177 into the groove of the rear wheel shaft 1041, the clutch 1173 departs from the ratchet mechanism 1172 by the force of the spring 1174a. Thus, the freewheel 117 is placed in the unidirectional freewheel state.

When, with the freewheel 117 placed in the unidirectional freewheel state, the ratchet ring 11724 mounted on the sprocket 11726 rotates clockwise in FIG. 11 seen from the right side, the ratchet claws 11721 are caught on the recess of the ratchet ring 11724 and transmits a force to rotate the rear wheel 104 forward, to the hub flange 1171. As a result, the rear wheel 104 rotates forward. On the other hand, when the ratchet ring 11724 fixed to the sprocket 11726 rotates counterclockwise in FIG. 11 seen from the right side, the ratchet claws 11721 are pushed down by the ratchet ring 11724. Thus, the ratchet claws 11721 are not caught on the ratchet ring 11724 and therefore do not transmit the force of the ratchet ring 11724 to rotate the rear wheel 104 rearward, to the hub flange 1171.

When the bicycle 1 is serving as the bicycle 1B, the user places the hub flange 1171 in the unidirectional freewheel state by operating the pin 1177. Thus, by stepping on the pedal 106, the user is able to rotationally drive the rear wheel 104 so that the bicycle 1B moves forward. On the other hand, when the bicycle 1 is serving as the cart 1C, the user places the hub flange 1171 in the bidirectional freewheel state by operating the pin 1177. Thus, when the user walks while pushing the cart 1C, the rotation force of the rear wheel 104 is not transmitted to the ratchet ring 11724 and therefore the ratchet ring 11724, chain, chain ring 107, or cranks 105 does not rotate. This prevents rotation of the cranks 105 or the like from unfavorably interfering with the user walking while pushing the cart 1C.

The above-mentioned bicycle 1 allows the user to use the bicycle 1 as both the bicycle 1B and the cart 1C. When using the bicycle 1 as the cart 1C, the center of gravity in the left-right direction is located approximately in the center of the cart 1C. This allows the user to push the cart 1C with high stability and to walk comfortably.

[Modification of First Embodiment] The above first embodiment may be modified to various forms without departing from the technical concept of the present invention. Examples of such modifications are described below. Note that two or more of the modifications below may be combined together as appropriate.

(1) While, in the above embodiment, the bicycle 1 serving as the cart 1C includes the two auxiliary wheels, the number of auxiliary wheels need not be two and may be one, or three or more.

(2) In the above embodiment, the auxiliary wheel 113F and auxiliary wheel 113B are detachable from the top tube 1011. Alternatively, at least one of the auxiliary wheel 113F and auxiliary wheel 113B may be always mounted on the top tube 1011.

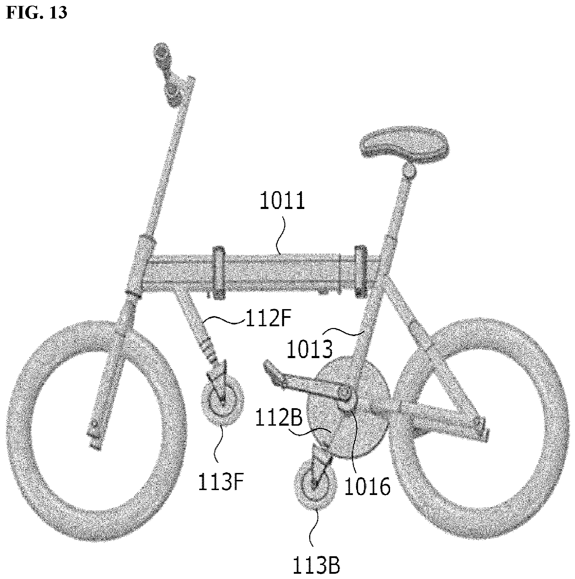

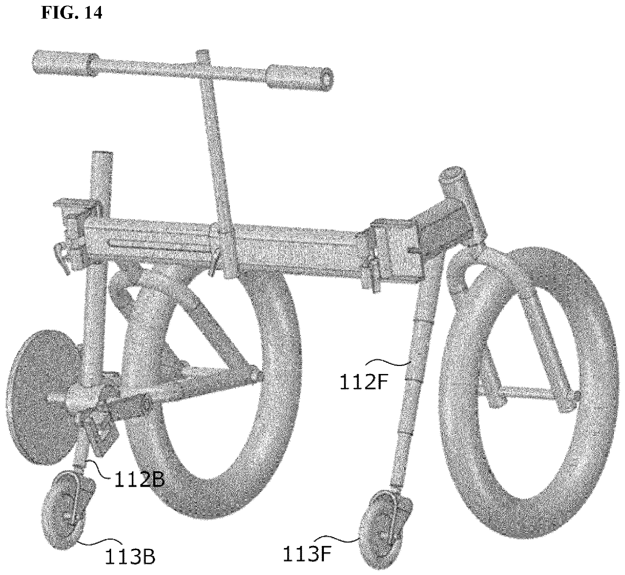

FIG. 13 is a left-side view of a bicycle 1 according to a modification serving as a bicycle 1B. FIG. 14 is a rear-right side view of the bicycle 1 according to the present modification serving as a cart 1C. In the bicycle 1 shown in FIGS. 13 and 14, an auxiliary wheel 113F is coupled to a top tube 1011 through a leg 112F extendable downward from the top tube 1011. When using the bicycle 1 as the bicycle 1B (FIG. 13), the user contracts the leg 112F. Thus, the auxiliary wheel 113F is located in a position near the top tube 1011. As a result, the auxiliary wheel 113F is less likely to interfere with the user pedaling the bicycle 1B. On the other hand, when using the bicycle 1 as the cart 1C (FIG. 14), the user extends the leg 112F so that the auxiliary wheel 113F contacts the ground.

In the bicycle 1 shown in FIGS. 13 and 14, an auxiliary wheel 113B is coupled to a frame 101 through a non-extendable leg 112B extending downward from a seat tube 1013 or BB shell 1016. When the bicycle 1 is serving as the bicycle 1B, the auxiliary wheel 113B does not contact the ground. Since the auxiliary wheel 113B is located below the BB shell 1016, the auxiliary wheel 113F does not interfere with the user pedaling the bicycle 1B.

(3) In the above embodiment, the length adjustment mechanism for adjusting the length of the top tube 1011 is able to fix the rear top tube 1011B with respect to the front top tube 1011F in any position in the front-rear direction. Alternatively, the length adjustment mechanism may fix the rear top tube 1011B with respect to the front top tube 1011F in a position selected by the user from among predetermined multiple positions.

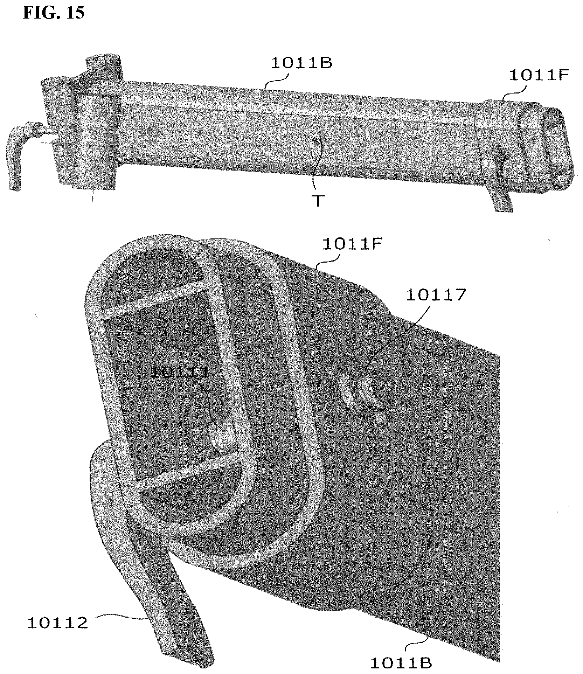

FIG. 15 is a drawing showing a length adjustment mechanism according to a modification. In the case of the length adjustment mechanism of FIG. 15, the user causes the hole of a front top tube 1011F to communicate with one of three holes T spaced in the front-rear direction on a side surface of a rear top tube 1011B, inserts a shaft 10111 into the communicating holes with a lever 10112 raised, fits a lock pin 10117 to an end of the shaft 10111 exposed out of the front top tube 1011F on a side opposite to the lever 10112, and lowers the lever 10112. Thus, the rear top tube 1011B is fixed to the front top tube 1011F.

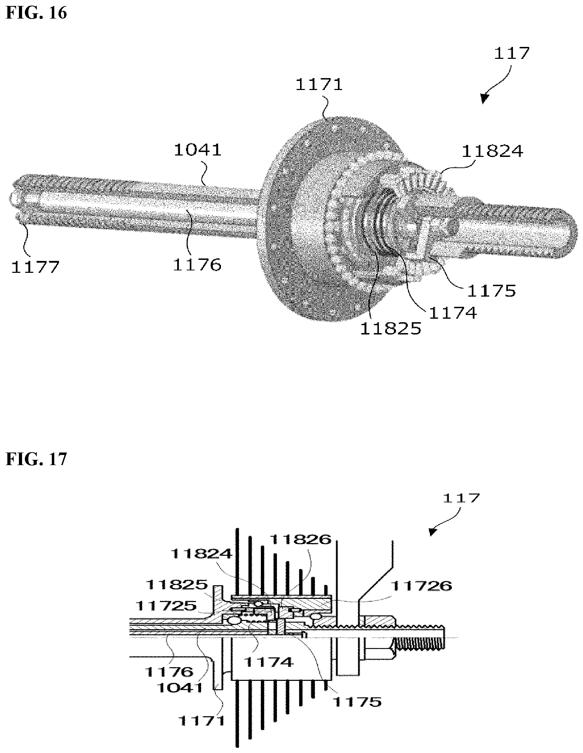

(4) While, in the above embodiment, the ratchet mechanism 1172 is structured to energize the ratchet claws 11721 using the ring-shaped spring 11723 such that the ratchet claws 11721 are raised, the ratchet mechanism may be structured otherwise. FIGS. 16 and 17 are drawings showing an example of a freewheel 117 including a star ratchet mechanism 1172 having a structure different from the above embodiment. The star ratchet mechanism 1172 shown in FIGS. 16 and 17 includes a pair of star ratchet rings having saw-teeth on the side surfaces. The saw-teeth of the driven ratchet ring 11824 of the pair of star ratchet rings have an inclined side surface on the clockwise side of the ridge seen from the right side and a 90-degree steep side surface on the counterclockwise side of the ridge. The driven ratchet ring 11824 is fitted in a spline and energized toward the right side of FIG. 16 or 17 by a spring 11825. The driven ratchet ring 11824 is mounted on a position in which the saw-teeth thereof are engaged with those of the driving ratchet ring 11826 mounted on a sprocket 11176.

For this reason, when the driving ratchet ring 11826 mounted on the sprocket 11176 rotates clockwise in FIGS. 16 and 17 seen from the right side, the saw-teeth of the driven ratchet ring 11824 are engaged with those of the driving ratchet ring 11826 and thus the force of the sprocket 11176 is transmitted to a hub flange 1171. On the other hand, when the driving ratchet ring 11826 rotates counterclockwise in FIGS. 16 and 17 seen from the right side, the saw-teeth of the driving ratchet ring 11826 are not engaged with those of the driven ratchet ring 11824 fitted in the spline and the driving ratchet ring 11826 rotates while pushing down the driven ratchet ring 11824. As a result, the force of the sprocket 11176 is not transmitted to the hub flange 1171.

When the star ratchet mechanism 1172 of FIGS. 16 and 17 is placed in the bidirectional freewheel state, the driven ratchet ring 11824 fitted in the spline is pressed by a pressing head 1175 and thus is prevented from contacting the driving ratchet ring 11826 (not shown in FIG. 16) mounted on the sprocket 11726 on the right side of the driven ratchet ring 11824. As a result, the force from the sprocket 11726 is not transmitted to the hub flange 1171.

While, in FIG. 16, the driven ratchet ring 11824 is shown as being exposed from the spline for clarity, it is actually only partially exposed from the spline, as shown in FIG. 17.

(5) In the above embodiment, the top tube 1011 is bent at the hinge 10114F and hinge 10114B around vertical axes. That is, the rotation shafts of the hinge 10114F and hinge 10114B extend vertically. However, the top tube 1011 need not be bent around vertical axes. For example, the rotation shaft of the hinge 10114F and the rotation shaft of the hinge 10114B may be inclined in different directions by the same angle with respect to the vertical direction so as to form an "inverted V"-shape in FIG. 1.

(6) In the above embodiment, when using the bicycle 1 as the cart 1C, the top tube 1011 is bent around the rotation shaft of the hinge 10114F counterclockwise when seen from above and bent around the rotation shaft of the hinge 10114B clockwise when seen from above. However, the top tube 1011 may be bent in the opposite directions. That is, the top tube 1011 may be bent around the rotation shaft of the hinge 10114F clockwise when seen from above and bent around the rotation shaft of the hinge 10114B counterclockwise when seen from above.

(7) The container 114, seat 115, and seat 116 described in the above embodiment are example attachments attachable to the cart 1C, and the shape, size, structure, or the like of each attachment may be changed arbitrarily.

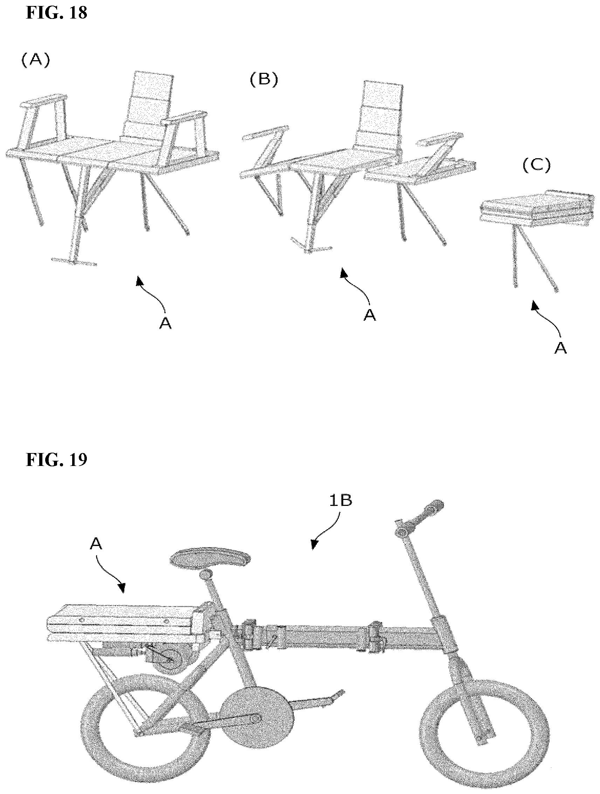

FIGS. 18A to 18C are drawings showing one of such example attachments. An attachment A illustrated in FIGS. 18A to 18C serves as a chair including armrests and a backrest when it is developed as shown in FIG. 18A. The attachment A becomes easily transportable when it is folded as shown in FIG. 18C. Note that FIG. 18B shows the attachment A in a state between the developed state in FIG. 18A and the folded state in FIG. 18C.

FIG. 19 shows a state in which the attachment A folded as shown in FIG. 18C is attached to a bicycle 1B. In the state shown in FIG. 19, the attachment A serves as the carrier of the bicycle 1B.

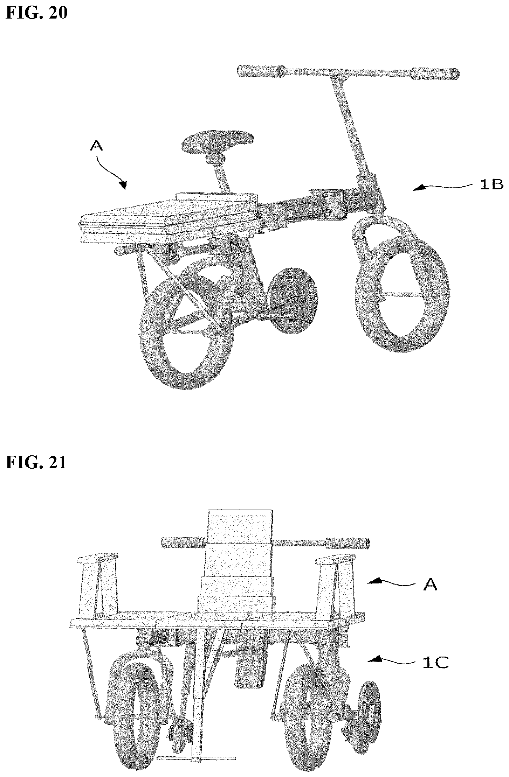

FIGS. 20 and 21 show states in which the attachment A developed as shown in FIG. 18A is attached to the cart 1C.

(7) In the above embodiment, the rear top tube 1011B is slid with respect to the front top tube 1011F with the rear top tube 1011B inserted into the front top tube 1011F. This configuration for sliding the rear top tube 1011B with respect to the front top tube 1011F is not limiting. For example, the rear top tube 1011B may be slid with respect to the front top tube 1011F with the front top tube 1011F inserted into the rear top tube 1011B. Also, a configuration may be employed in which one of the front top tube 1011F and rear top tube 1011B is not inserted into the other. For example, the front top tube 1011F and rear top tube 1011B lined up in the left-right direction and engaged with each other may be slid with respect to each other.

Sliding the rear top tube 1011B with respect to the front top tube 1011F and sliding the front top tube 1011F with respect to the rear top tube 1011B have the same meaning. Also, fixing the rear top tube 1011B to the front top tube 1011F and fixing the front top tube 1011F to the rear top tube 1011B have the same meaning.

### [Second Embodiment]

A bicycle 2 according to a second embodiment of the present invention will be described below. The bicycle 2 is a bicycle whose wheelbase can be changed.

Many components of the bicycle 2 according to the second embodiment are the same as those of the bicycle 1 according to the first embodiment. For this reason, the respects in which the bicycle 2 differs from the bicycle 1 will be described below and the respects in which the bicycle 2 are the same as the bicycle 1 will not be described.

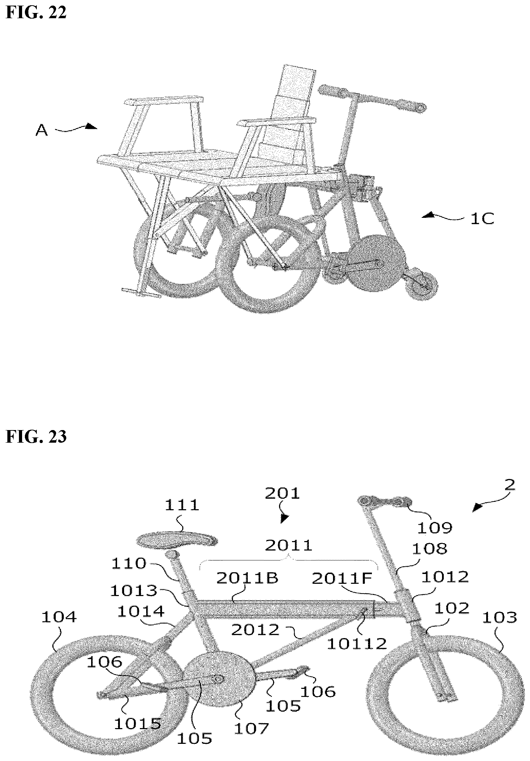

FIG. 22 is a right side view of the bicycle 2. FIG. 23 is a drawing showing a state in which the bicycle 2 is separated in the front-rear direction. In FIGS. 22 and 23, the components of the bicycle 2 same as those of the bicycle 1 are given the same reference signs as those used in the description of the first embodiment.

The bicycle 2 includes a top tube 2011 in place of the top tube 1011 included in the bicycle 1. The bicycle 2 also includes a down tube 2012 that is not included in the bicycle 1.

The top tube 2011 includes a front top tube 2011F and a rear top tube 2011B. One end of the front top tube 2011F is coupled to a head tube 1012. One end of the rear top tube 2011B is coupled to a seat tube 1013.

The rear top tube 2011B can be slid with respect to the front top tube 2011F. In the present embodiment, for example, the rear top tube 2011F is slid with respect to the front top tube 2011F with the front top tube 2011F inserted into the rear top tube 2011B.

The rear top tube 2011F slid with respect to the front top tube 2011F is fixed to the front top tube 2011F by a length adjustment mechanism. In the present embodiment, for example, the rear top tube 2011F is fixed to the front top tube 2011F by a length adjustment mechanism including the lever 10112 and pressing head 10113 (not shown in FIGS. 22 and 23) included in the bicycle 1.

A user releases the rear top tube 2011B fixed to the front top tube 2011F by raising the lever 10112. The user then adjusts the length of the top tube 2011 to a desired length by sliding the rear top tube 2011B with respect to the front top tube 2011F in the front-rear direction. The user then fixes the rear top tube 2011B to the front top tube 2011F by pushing down the lever 10112, completing the adjustment of the length of the top tube 2011.

One end of the down tube 2012 is coupled to the rear top tube 2011B, and the other end is coupled to a BB shell 1016 (not shown in FIGS. 22 and 23). The down tube 2012 has a function of increasing the stiffness of the frame 201 of the bicycle 2.

According to the above bicycle 2, the user is able to change the length of the wheelbase H, which is the distance from the center of a front wheel 103 to the center of a rear wheel 104, by adjusting the length of the top tube 2011.

Thus, the user is able to adjust the geometry of the bicycle 2 to a geometry suitable for the body of the user by making the following adjustments .
(A) The adjustment of the height of handlebars 109 by changing the length of a handle post 108 (or the position of the handle post 108 with respect to the head tube 1012)
(B) The adjustment of the height of a saddle 111 by changing the length of a seat post 110 (or the position of the seat post 110 with respect to the seat tube 1013)
(C) The adjustment of the length of the wheelbase H by changing the position of the rear top tube 2011B with respect to the front top tube 2011F.

### [Modification of Second Embodiment]

The above second embodiment may be modified to various forms without departing from the technical concept of the present invention. Examples of such modifications are described below. Note that two or more of the modifications below may be combined together as appropriate.

(1) In the above embodiment, the rear top tube 2011B is slid with respect to the front top tube 2011F with the front top tube 2011F inserted into the rear top tube 2011B. This configuration for sliding the rear top tube 2011B with respect to the front top tube 2011F is not limiting. For example, the front top tube 1011F and the rear top tube 1011B lined up in the left-right direction and engaged with each other may be slid with respect to each other.

Sliding the rear top tube 2011B with respect to the front top tube 2011F and sliding the front top tube 2011F with respect to the rear top tube 2011B have the same meaning. Also, fixing the rear top tube 2011B to the front top tube 2011F and fixing the front top tube 2011F to the rear top tube 2011B have the same meaning.

(2) In the above embodiment, the front end of the down tube is coupled to the rear top tube 2011B. Instead, the front end of the down tube may be coupled to the top tube 1011.

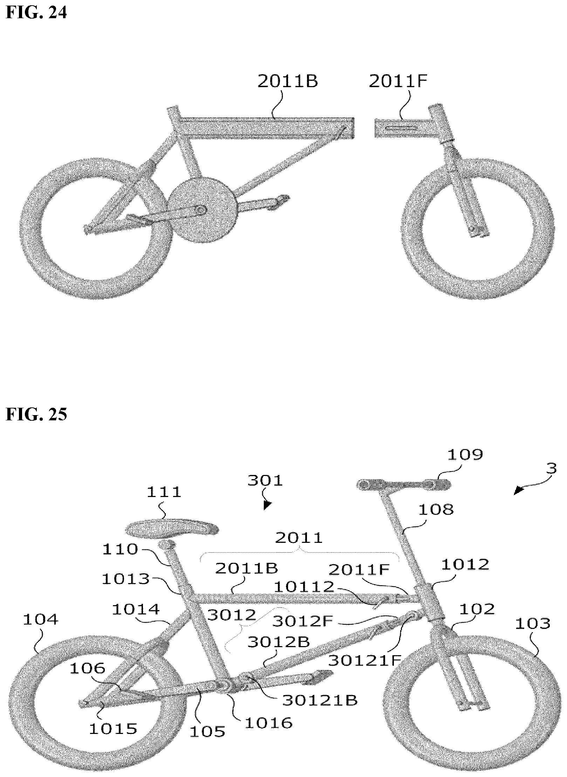

FIG. 24 is a right side view of a bicycle 3 according to this modification. Note that a chain ring 107 is not shown in FIG. 24.

The bicycle 3 according to this modification includes a down tube 3012 in place of the down tube 2012 included in the bicycle 2 according to the above embodiment. The down tube 3012 includes a front down tube 3012F and a rear down tube 3012B. One end of the front down tube 3012F is coupled to the head tube 1012. One end of the rear down tube 3012B is coupled to a BB shell 1016.

The rear down tube 3012B can be slid with respect to the front down tube 3012F. In the present embodiment, for example, the rear top tube 2011B is slid with respect to the front top tube 2011F with the front down tube 3012F inserted into the rear down tube 3012B.

The rear down tube 3012B slid with respect to the front down tube 3012F is fixed to the front down tube 3012F by a length adjustment mechanism (an example of a second length adjustment function). In the present embodiment, for example, the rear down tube 3012B is fixed to the front down tube 3012F by a length adjustment mechanism having a configuration similar to the length adjustment mechanism including the lever 10112 and pressing head 10113 (not shown in FIGS. 22 and 23) included in the bicycle 1.

Note that while the length adjustment mechanism for fixing the rear down tube 3012B to the front down tube 3012F includes a lever 3013 and a pressing head, FIG. 24 shows only the lever 3013, which can be seen from outside.

The front down tube 3012F includes a hinge 30121F. The hinge 30121F is a mechanism capable of bending the front down tube 3012F around a horizontal axis. The rear down tube 3012B includes a hinge 30121B. The hinge 30121B is a mechanism capable of bending the rear down tube 3012B around a horizontal axis.

The angle of the top tube 2011 with respect to the head tube 1012 and seat tube 1013 is fixed. For this reason, without the hinge 30121F and hinge 30121B, the length of the top tube 2011 and down tube 3012 cannot be adjusted. That is, the hinge 30121F and hinge 30121B allows a user to freely change the angle of the down tube 3012 with respect to the head tube 1012 and BB shell 1016 and thus performs a function of substantially adjusting the length of the top tube 2011 and down tube 3012.

The user releases the rear top tube 2011B fixed to the front top tube 2011F by raising the lever 10112. The user also releases the rear down tube 3012B fixed to the front down tube 3012F by raising the lever 3013. The user then changes the length of the wheelbase H to a desired length by sliding the rear top tube 2011B with respect to the front top tube 2011F in the front-rear direction and sliding the rear down tube 3012B with respect to the front down tube 3012F in the front-rear direction. The user then fixes the rear top tube 2011B to the front top tube 2011F by pushing down the lever 10112. The user also fixes the rear down tube 3012B to the front down tube 3012F by pushing down the lever 3013. Thus, the user completes the adjustment of the length of the wheelbase H.

A configuration other than this modification may be employed as a configuration for sliding the rear down tube 3012B with respect to the front down tube 3012F. For example, the front down tube 3012F and the rear down tube 3012B lined up in the left-right direction and engaged with each other may be slid with respect to each other.

Sliding the rear down tube 3012B with respect to the front down tube 3012F and sliding the front top tube 3012F with respect to the rear down tube 3012B have the same meaning. Also, fixing the rear down tube 3012B to the front down tube 3012F and fixing the front down tube 3012F to the rear down tube 3012B have the same meaning.

### Description of Reference Signs

1...bicycle, 101...frame, 102...front fork, 103...front wheel, 104...rear wheel, 105...crank, 106...pedal, 107...chain ring, 108...handle post, 109...handlebar, 110...seat post, 111...saddle, 112...leg, 113...auxiliary wheel, 114...container, 115...seat, 116...seat, 117...freewheel, 118...crank lock mechanism, 1011...top tube, 1012...head tube, 1013...seat tube, 1014...seat stay, 1015...chain stay, 1016...BB shell, 1041...rear wheel shaft, 1141...hook, 1142...coupling bar, 1151...coupling bar, 1161...footrest, 1171...hub flange, 1172...ratchet mechanism, 1173...clutch, 1174...spring, 1175...pressing head, 1176... clutch bar, 1177... pin, 10111...shaft, 10112...lever, 10113...pressing head, 10114...hinge, 10115...mounting portion, 10116...mounting portion, 10117...lock pin, 11721...ratchet nail, 11722...protruding portion, 11723...spring, 11724...ratchet ring, 11726...sprocket, 11824...driven ratchet ring, 11825...spring, 11826...driving ratchet ring, 2...bicycle, 201...frame, 2011...top tube, 2012...down tube, 3...bicycle, 301...frame, 3012...down tube, 3013...lever, 30121...hinge.

## Claims

1. A bicycle comprising a top tube comprising
a front top tube having one end coupled to a head tube and a rear top tube having one end coupled to a seat tube,
wherein a length of the top tube is changed by sliding the rear top tube with respect to the front top tube, and
the bicycle further comprising a length adjustment mechanism configured to fix the rear top tube to the front top tube.

2. The bicycle of claim 1, further comprising a down tube having one end coupled to the rear head tube and another end coupled to a bottom bracket shell.

3. The bicycle of claim 1, further comprising
a down tube comprising a front down tube having one end coupled to the head tube and a rear down tube having one end coupled to a bottom bracket shell,
wherein the front down tube is provided with a front hinge comprising a horizontally extending rotation shaft,
wherein the rear down tube is provided with a rear hinge comprising a horizontally extending rotation shaft,
wherein a length of the down tube is changed by sliding the rear down tube with respect to the front down tube, and
the bicycle further comprising, in addition to the length adjustment mechanism serving as a first length adjustment mechanism,
a second length adjustment mechanism configured to fix the rear down tube to the front down tube.

4. The bicycle according to claim 1,
wherein the front top tube is provided with a front hinge comprising a vertically extending rotation shaft,
wherein the front hinge allows a state of the front top tube to be switched between a straight state and a bent state,
wherein the rear top tube is provided with a rear hinge a vertically extending rotation shaft,
wherein the rear hinge allows a state of the rear top tube to be switched between a straight state and a bent state,
wherein a horizontal distance between the rotation shaft of the front hinge and a rotation shaft of a front wheel and a horizontal distance between the rotation shaft of the rear hinge and a rotation shaft of a rear wheel are substantially equal,
wherein the bicycle serves as a bicycle when the front top tube and the rear top tube are straight,
wherein the bicycle serves as a cart when the front top tube and the rear top tube are bent,
the bicycle further comprising, in addition to the front wheel and the rear wheel when the bicycle is serving as a bicycle, one or more auxiliary wheels that do not contact the ground when the bicycle is serving as a bicycle and contacts the ground when the bicycle is serving as a cart, and
the bicycle further comprising a force transmission mechanism capable of switching between a unidirectional freewheel state in which when a force to rotate the rear wheel forward is applied, the force is transmitted to the rear wheel and when a force to rotate the rear wheel rearward is applied, the force is not substantially transmitted to the rear wheel and a bidirectional freewheel state in which in any of a case where a force to rotate the rear wheel forward is applied and a case where a force to rotate the rear wheel rearward is applied, the force is not substantially transmitted to the rear wheel.

5. The bicycle of claim 4,
wherein the one or more auxiliary wheel are two auxiliary wheels, and
wherein when the bicycle is serving as a cart, a distance between a position in which the auxiliary wheel located near the front wheel of the two auxiliary wheels contacts the ground and a position in which the front wheel contacts the ground and a distance between a position in which the auxiliary wheel located near the rear wheel of the two auxiliary wheels contacts the ground and a position in which the rear wheel contacts the ground are substantially equal.

6. The bicycle of claim 4, further comprising a seat, the seat being an apparatus that when the bicycle serves as a cart, is mounted on the top tube, the rotation shaft of the front wheel, and the rotation shaft of the rear wheel such that a self-weight of the apparatus is applied to the top tube, the rotation shaft of the front wheel, and the rotation shaft of the rear wheel and on which a person is to be seated.

7. The bicycle of claim 4, further comprising a container, the container being an apparatus that when the bicycle serves as a cart, is mounted on the top tube, the rotation shaft of the front wheel, and the rotation shaft of the rear wheel such that a self-weight of the apparatus is applied to the top tube, the rotation shaft of the front wheel, and the rotation shaft of the rear wheel and that aims to contain goods.

8. The bicycle of claim 4, wherein at least one of the one or more auxiliary wheels is detachable from the top tube.

9. The bicycle of claim 9, wherein at least one of the one or more auxiliary wheels is coupled to the top tube through a leg extendable downward from the top tube.

10. The bicycle of claim 4, wherein at least one of the one or more auxiliary wheels is coupled to the seat tube or a bottom bracket shell through a leg that does not extend downward from the seat tube or the bottom bracket shell.
